# EUROPÄISCHE PATENTSCHRIFT

(11) **EP 1 603 780 B1**
(45) Veröffentlichungstag und Bekanntmachung des Hinweises auf die Patenterteilung: **10.09.2008**
(21) Anmeldenummer: 03788846.8
(22) Anmeldetag: 03.12.2003
(51) Int. Cl.: B60S 1/04, B60R 21/01, B60S 1/08

(54) **SCHEIBENWISCHVORRICHTUNG**
WINDSCREEN WIPER DEVICE
DISPOSITIF D'ESSUIE-GLACE

(30) Priorität: 13.02.2003 DE 10305857
(43) Veröffentlichungstag der Anmeldung: 14.12.2005
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2003/003978
(87) Internationale Veröffentlichungsnummer: WO 2004/071825

(56) Entgegenhaltungen:
- DE-A- 10 021 142
- DE-A- 19 843 042
- DE-C- 10 128 967
- US-B1- 6 193 304

## Beschreibung

Die Erfindung betrifft eine Scheibenwischvorrichtung, insbesondere für ein Kraftfahrzeug mit mindestens einem Wischarm und einer bei einem Aufprall anhebbaren Motorhaube.

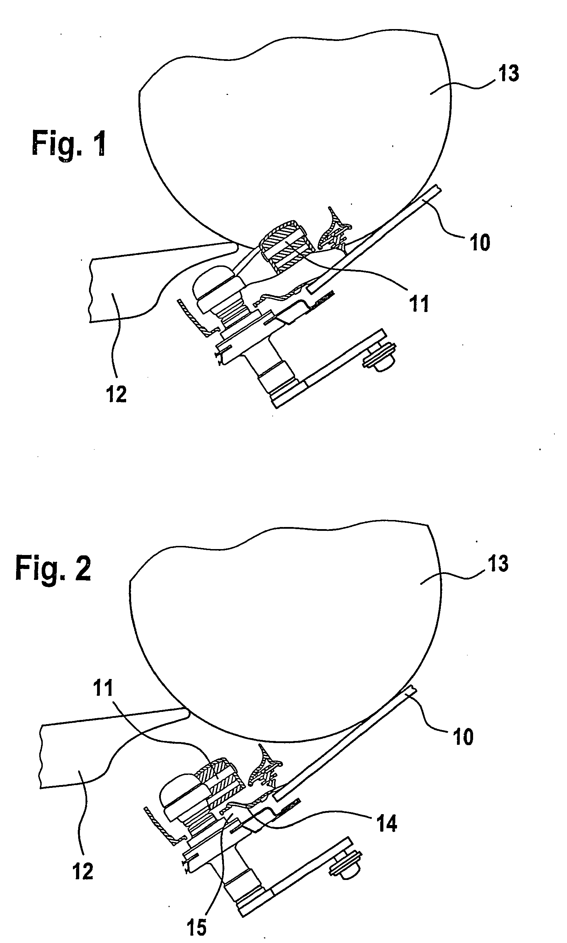

Fig. 1 zeigt eine Windschutzscheibe 10, einen Wischarm 11 und eine Motorhaube 12 nach einer Kollision mit einem Fußgänger 13. Der Fußgänger 13 prallt im ungünstigsten Fall mit seinem Kopf auf die harte Windschutzscheibe 10 und auf den vorstehenden und scharfkantigen Wischarm 11. Durch den Aufprall auf die Windschutzscheibe 10 und insbesondere auf den Wischarm 11 besteht die Gefahr von schlimmen Verletzungen für den Fußgänger 13. Aufgrund von zukünftigen Gesetzen bezüglich der Fußgängersicherheit bei einem Unfall ist eine Motorhaube entwickelt worden, die sich bei einem Aufprall im Bereich der Windschutzscheibe anhebt und somit einen zusätzlichen Verformungsweg zur Verfügung stellt. Dieser zusätzliche Verformungsweg kann jedoch durch den Wischarm 11 behindert werden, weil eine Kollision zwischen der angehobenen Motorhaube und dem Wischarm 11 möglich ist.

DE-C-10128967 offenbart den Oberbegriff des Anspruchs 1.

Die Erfindung hat die Aufgabe, eine Scheibenwischvorrichtung der eingangs genannten Art dahingehend zu verbessern, dass der Verformungsweg einer bei einem Aufprall angehobenen Motorhaube nicht behindert wird.

Die Erfindung löst die gestellte Aufgabe durch eine Scheibenwischvorrichtung, insbesondere für ein Kraftfahrzeug mit mindestens einem Wischarm und einer bei einem Aufprall anhebbaren Motorhaube, wobei der mindestens eine Wischarm beim Aufprall in eine Position unterhalb einer Windschutzscheibe oder in eine Position im Bereich eines Wischfeldes bewegbar ist. Somit gibt der mindestens eine Wischarm beim Aufprall der angehobenen Motorhaube den zusätzlichen Verformungsweg frei, so dass dieser Verformungsweg für die Verformung der Motorhaube ungehindert genutzt werden kann. Zu diesem Zweck wird der mindestens eine Wischarm unterhalb der Windschutzscheibe positioniert, so dass sich die Motorhaube über den unterhalb der Windschutzscheibe positionierten mindestens einen Wischarm hinweg bewegen kann, oder der Wischarm wird in den Bereich des Wischfeldes bewegt, der außerhalb des Verformungsweges des mindestens einen Wischarmes liegt. Wenn der mindestens eine Wischarm beim Aufprall unterhalb der Windschutzscheibe positioniert wird, gewährleistet er nicht nur einen ungehinderten Verformungsweg für die Motorhaube, sondern erhöht bei einem Aufprall mit einem Fußgänger zusätzlich den Schutz des Fußgängers am Fahrzeug, da sich dieser nicht mehr an den harten und relativ scharfkantigen Teilen des mindestens einen Wischarmes, insbesondere am Gelenk zwischen dem Befestigungsteil und dem Gelenkteil des Wischarms, verletzen kann.

Wenn beim Aufprall ein an dem mindestens einen Wischarm angeordnetes Wischblatt auf einer unterhalb der Windschutzscheibe vorgesehenen Kunststoffabdeckung abgelegt wird, wird die Verletzungsgefahr für den Fußgänger zusätzlich reduziert, da die Kunststoffabdeckung relativ weich und somit nachgiebig ist.

Befindet sich unterhalb der Kunststoffabdeckung ein Freiraum, so ist die Verformung der Kunststoffabdeckung ungehindert möglich, so dass die Kunststoffabdeckung die Aufprallenergie ungehindert aufnehmen kann, wodurch das Verletzungsrisiko des Fußgängers weiterhin reduziert wird.

Erfindungsgemäß wird beim Aufprall eine Antriebswelle des mindestens einen Wischarms durch eine automatische Betätigung von mindestens einem Wischermotor um einen erforderlichen Winkel gedreht werden. Somit lässt sich der mindestens eine Wischarm auf einfache und schnelle Weise unterhalb der Windschutzscheibe oder in den Bereich des Wischfeldes positionieren.

Um den mindestens einen Wischarm beim Aufprall schnell zu positionieren, wird beim Aufprall ein Signal zum Anheben der Motorhaube auch zum Positionieren des mindestens einen Wischarmes genutzt. Dabei kann das Signal in einer Bordelektronik oder in einer Elektronik des mindestens einen Wischermotors zur Ansteuerung des mindestens einen Wischermotors verarbeitet werden.

Damit eine Kollision zwischen der Motorhaube und dem mindestens einen Wischarm vermieden werden kann, ist es zweckmäßig, wenn das Anheben der Motorhaube und die Positionierung des mindestens einen Wischarmes zeitlich aufeinander abgestimmt sind. Folglich müssen die Massenträgheit der Motorhaube und des Wischarmes, wie auch der zu überwindende Anhebeweg der Motorhaube und die Bewegungsstrecke für die Positionierung des Wischarmes berücksichtigt werden. Die Anhebung der Motorhaube kann deshalb gleichzeitig oder etwas früher als die Bewegung des Wischarms in die erforderliche Position erfolgen. Beide Bewegungen geschehen jedoch innerhalb weniger Millisekunden, so dass auch eine zuerst angehobene Motorhaube für einen außenstehenden Betrachter gleichzeitig mit der Positionierung des mindestens einen Wischarms zu erfolgen scheint.

Wenn der mindestens eine Wischermotor ein Reversiermotor oder ein Wischerdirektantrieb ist, bei dem der Wischarm direkt auf der Antriebsachse des Wischermotors befestigt ist, ist eine Positionierung des mindestens einen Wischarms auch unterhalb der Windschutzscheibe möglich. Wenn der mindestens eine Wischermotor ein Rundläufermotor ohne Elektronik ist, ist eine Positionierung des mindestens einen Wischarmes nur in den Bereich des Wischfeldes möglich.

Damit eine schnelle Positionierung des mindestens einen Wischarmes besonders gut möglich ist, befinden sich in seiner Parkstellung eine Motorkurbel und eine Koppelstange eines Wischergestänges außerhalb einer Streck- oder Decklage.

Vorteilhafterweise ist es möglich, dass die Positionierung des mindestens einen Wischarmes unterhalb der Windschutzscheibe aus einer Parkstellung im Bereich des unteren Randes der Windschutzscheibe heraus erfolgt. Zusätzlich oder alternativ kann die Positionierung des mindestens einen Wischarmes auch aus einer Parkstellung im Bereich der A-Säulen und/oder während des Wischbetriebes erfolgen.

Nachfolgend wird ein Ausführungsbeispiel der erfindungsgemäßen Scheibenwischvorrichtung anhand der beiliegenden Zeichnungen näher erläutert.

Im Einzelnen zeigen:
- Fig. 1: eine Seitenansicht auf den unteren Bereich einer Windschutzscheibe, einen Wischarm und eine Motorhaube nach dem Stand der Technik;
- Fig. 2: eine Seitenansicht auf den unteren Bereich einer Windschutzscheibe, eines Wischarms und einer Motorhaube gemäß der Erfindung;
- Fig. 3: ein Blockschaltbild zur Positionierung eines Wischarms durch eine Bordelektronik;
- Fig. 4: ein Blockschaltbild zur Positionierung eines Wischarms durch eine Elektronik in einem Wischermotor.

Fig. 2 zeigt einen Fußgänger 13 nach einer Kollision mit einem Kraftfahrzeug, wobei der Kopf des Fußgängers 13 im ungünstigsten Fall auf eine Windschutzscheibe 10 prallt. Unmittelbar nach der Kollision wird eine Motorhaube 12 angehoben, so dass ein Wischarm 11 unterhalb der Windschutzscheibe 10 positioniert werden kann. Somit kann der Kopf des Fußgängers 13 den Wischarm 11 nur noch sehr gering oder im günstigsten Falle sogar überhaupt nicht mehr berühren. Der Wischarm 11 liegt auf einer Kunststoffabdeckung 14 auf, die relativ weich und gut verformbar ist, so dass ein eventueller Aufprall des Fußgängers 13 auf den Wischarm 11 von der Kunststoffabdeckung 14 aufgenommen werden kann. Unterhalb der Kunststoffabdeckung 14 befindet sich ein Freiraum 15, der der Kunststoffabdeckung 14 einen genügend großen Spielraum zur Verformung bietet.

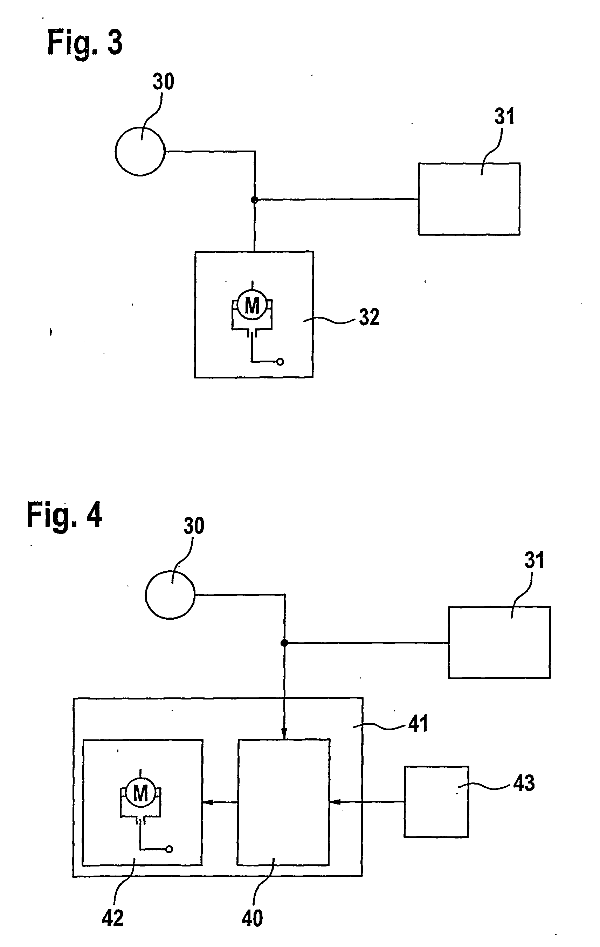

Fig. 3 zeigt einen Sensor 30, der auch zusammen mit mehreren anderen solcher Sensoren an der Motorhaube eines Kraftfahrzeuges angeordnet sein kann. Im Falle eines Aufpralls sendet der Sensor 30 ein Signal an einen Aktuator 31 zur Anhebung der Motorhaube 12 und an eine hier nicht näher dargestellte Bordelektronik. Die Bordelektronik betätigt ebenfalls einen Wischermotor 32, der vorzugsweise ein Reversiermotor oder ein Wischerdirektantrieb ist, der den Wischarm 11 (siehe Fig. 2) vorzugsweise in eine Position unterhalb der Windschutzscheibe 10 positioniert. Um eine Kollision zwischen der Motorhaube 12 und dem Wischarm 11 zu vermeiden, müssen die Aktivierung des Aktuators 31 und des Wischermotors 32 zeitlich aufeinander abgestimmt sein. Der Wischermotor 32 kann also erst aktiviert werden, wenn durch die Anhebung der Motorhaube 12 genügend Platz geschaffen wurde, um beim Positionieren des Wischarmes 11 eine Kollision des Wischarms 11 mit der Motorhaube 12 zu vermeiden. Bei der zeitlichen Abstimmung des Aktuators 31 und des Wischermotors 32 ist es erforderlich, die Massenträgheit sowohl der Motorhaube 12, wie auch des Wischarmes 11 und die zurückzulegenden Wegstrecken für die Anhebung der Motorhaube 12 und die Positionierung des Wischarmes 11 zu berücksichtigen.

Fig. 4 zeigt den Sensor 30, der sein Signal an den Aktuator 31 und an' eine Elektronik 40, die im Gehäuse 41 eines Wischermotors 42 untergebracht ist, weitergibt. Bei dieser Variante kann also auf die Bordelektronik zur Aktivierung des Wischermotors 42 verzichtet werden. Stattdessen wird beim Aufprall die Elektronik 40, mit der über einen Lenkstockschalter 43 üblicherweise der Wischermotor 42 eingeschaltet wird, zur Positionierung des Wischarmes 11 (siehe Fig. 2) verwendet.

## Patentansprüche

1. Scheibenwischvorrichtung für ein Kraftfahrzeug mit einer bei einem Aufprall mittels eines Aktuators anhebbaren Motorhaube (12), bei welcher mindestens ein Wischarm (11) dazu vorgesehen ist, auf einer Windschutzscheibe einen Wischbereich zu überwischen, **dadurch gekennzeichnet, dass** der mindestens eine Wischarm (11) beim Aufprall in eine Position unterhalb der Windschutzscheibe (10) oder in eine Position im Bereich des Wischfeldes bewegbar ist, wobei beim Aufprall eine Antriebswelle des mindestens einen Wischarms (11) durch automatische Betätigung von mindestens einem Wischermotor (32,42) um einen bestimmten Winkel drehbar ist.

2. Scheibenwischvorrichtung nach Anspruch 1, **dadurch gekennzeichnet, dass** beim Aufprall ein an dem mindestens einen Wischarm (11) angeordnetes Wischblatt auf einer unterhalb der Windschutzscheibe (10) vorgesehenen Kunststoffabdeckung (14) ablegbar ist.

3. Scheibenwischvorrichtung nach Anspruch 2, **dadurch gekennzeichnet, dass** sich unterhalb der Kunststoffabdeckung (14) ein Freiraum (15) befindet.

4. Scheibenwischvorrichtung nach einem der Ansprüche 1 bis 3, **dadurch gekennzeichnet, dass** beim Aufprall ein Signal zum Anheben der Motorhaube (12) auch zum Positionieren des mindestens einen Wischarms (11) nutzbar ist.

5. Scheibenwischvorrichtung nach Anspruch 4, **dadurch gekennzeichnet, dass** das Signal in einer Bordelektronik zur Ansteuerung des mindestens einen Wischermotors (32) verarbeitbar ist.

6. Scheibenwischvorrichtung nach Anspruch 4, **dadurch gekennzeichnet, dass** das Signal in einer Elektronik (40) des mindestens einen Wischermotors (42) zur Ansteuerung des mindestens einen Wischermotors (42) verarbeitbar ist.

7. Scheibenwischvorrichtung nach einem der Ansprüche 4 bis 6, **dadurch gekennzeichnet, dass** beim Aufprall das Anheben der Motorhaube (12) und die Positionierung des mindestens einen Wischarms (11) zeitlich aufeinander abstimmbar sind.

8. Scheibenwischvorrichtung nach einem der Ansprüche 5 bis 7, **dadurch gekennzeichnet, dass** der mindestens eine Scheibenwischmotor (32, 42) ein Reversiermotor oder ein Wischerdirektantrieb ist.

9. Scheibenwischvorrichtung nach einem der Ansprüche 1 bis 8, **dadurch gekennzeichnet, dass** die Positionierung des mindestens einen Wischarms (11) aus einer Parkstellung im Bereich des unteren Randes der Windschutzscheibe (10) und/oder aus einer Parkstellung im Bereich der A-Säulen und/oder während des Wischbetriebes erfolgt.

10. Scheibenwischvorrichtung nach einem der Ansprüche 1 bis 9, **dadurch gekennzeichnet, dass** sich in der Parkstellung des mindestens einen Wischarms (11) eine Motorkurbel und eine Koppelstange eines Wischergestänges außerhalb einer Streck- oder Decklage befinden.

## Claims

1. Windscreen wiper device for a motor vehicle having an engine bonnet (12) which can be raised by means of an actuator in the event of a collision, in which windscreen wiper device at least one wiper arm (11) is provided to wipe over a wiping region on a windscreen, **characterized in that,** in the event of a collision, the at least one wiper arm (11) can be moved into a position below the windscreen (10) or into a position in the region of the wiping field, with it being possible in the event of the collision for a driveshaft of the at least one wiper arm (11) to be rotated by a certain angle by means of an automatic actuation of at least one wiper motor (32, 42).

2. Windscreen wiper device according to Claim 1, **characterized in that**, in the event of the collision, a wiper blade which is arranged on the at least one wiper arm (11) can be placed against a plastic cover (14) provided below the windscreen (10).

3. Windscreen wiper device according to Claim 2, **characterized in that** a free space (15) is situated below the plastic cover (14).

4. Windscreen wiper device according to one of Claims 1 to 3, **characterized in that,** in the event of the collision, a signal for raising the engine bonnet (12) can also be utilized for positioning the at least one wiper arm (11).

5. Windscreen wiper device according to Claim 4, **characterized in that** the signal can be processed in an on-board electronic system for the activation of the at least one wiper motor (32).

6. Windscreen wiper device according to Claim 4, **characterized in that** the signal can be processed in an electronic system (40) of the at least one wiper motor (42) for the activation of the at least one wiper motor (42).

7. Windscreen wiper device according to one of Claims 4 to 6, **characterized in that,** in the event of the collision, the raising of the engine bonnet (12) and the positioning of the at least one wiper arm (11) can be co-ordinated with one another in terms of time.

8. Windscreen wiper device according to one of Claims 5 to 7, **characterized in that** the at least one windscreen wiper motor (32, 42) is a reversing motor or a direct wiper drive.

9. Windscreen wiper device according to one of Claims 1 to 8, **characterized in that** the positioning of the at least one wiper arm (11) takes place from a parked position in the region of the lower edge of the windscreen (10) and/or from a parked position in the region of the A-pillars and/or during wiper operation.

10. Windscreen wiper device according to one of Claims 1 to 9, **characterized in that,** in the parked position of the at least one wiper arm (11), a motor crank and a coupling rod of a wiper mechanism are situated outside an extended or covering position.

## Revendications

1. Dispositif d'essuie-glace d'un véhicule automobile comportant un capot (12) relevé par un actionneur en cas de collision, et selon lequel au moins un bras d'essuie-glace (12) est prévu pour balayer une plage d'essuyage sur le pare-brise,
**caractérisé en ce qu'**
en cas de collision, au moins un bras d'essuie-glace (11) se déplace sous le pare-brise (10) ou dans une position dans la région du champ d'essuyage, et en cas de collision, l'arbre d'entraînement d'au moins bras d'essuie-glace (11) est tourné par l'actionnement automatique d'au moins un moteur d'essuie-glace (32, 42) selon un angle déterminé.

2. Dispositif d'essuie-glace selon la revendication 1,
**caractérisé en ce qu'**
en cas de collision, une raclette d'essuie-glace prévu sur au moins un bras d'essuie-glace (11) se dépose sur un moyen de recouvrement (14) en matière plastique prévu sous le pare-brise (10).

3. Dispositif d'essuie-glace selon la revendication 2,
**caractérisé par**
un espace libre (15) sous le moyen de recouvrement en matière plastique (14).

4. Dispositif d'essuie-glace selon l'une des revendications 1 à 3,
**caractérisé en ce qu'**
en cas de collision, le signal de soulèvement du capot (12) est également utilisé pour positionner au moins un bras d'essuie-glace (11).

5. Dispositif d'essuie-glace selon la revendication 4,
**caractérisé en ce que**
le signal est traité dans l'électronique embarquée pour commander au moins un moteur d'essuie-glace (32).

6. Dispositif d'essuie-glace selon la revendication 4,
**caractérisé en ce que**
le signal est traité dans l'électronique (40) d'au moins un moteur d'essuie-glace (42) pour commander au moins ce moteur d'essuie-glace (42).

7. Dispositif d'essuie-glace selon l'une des revendications 4 à 6,
**caractérisé en ce qu'**
en cas de collision, on détermine l'ordre chronologique du soulèvement du capot (12) et du positionnement d'au moins un bras d'essuie-glace (11).

8. Dispositif d'essuie-glace selon l'une des revendications 5 à 7,
**caractérisé en ce qu'**
au moins un moteur d'essuie-glace (32, 42) est un moteur réversible ou un entraînement direct d'essuie-glace.

9. Dispositif d'essuie-glace selon l'une des revendications 1 à 8,
**caractérisé en ce que**
le positionnement d'au moins un bras d'essuie-glace (11) se fait à partir d'une position de rangement au niveau du bord inférieur du pare-brise (10) et/ou à partir d'une position de rangement au niveau des colonnes A et/ou pendant le fonctionnement d'essuyage.

10. Dispositif d'essuie-glace selon l'une des revendications 1 à 9,
**caractérisé en ce qu'**
en position de rangement d'au moins un bras d'essuie-glace (11), une manivelle de moteur et une bielle d'une tringlerie d'essuie-glace se trouvent à l'extérieur de la position d'extension ou de couverture.
